# EUROPEAN PATENT APPLICATION

(11) **EP 1 477 326 A1**
(43) Date of publication of application: **17.11.2004**
(21) Application number: 04076434.2
(22) Date of filing: 14.05.2004
(51) Int. Cl.: B44D 2/00, B44D 3/00, B44C 1/24, B44C 5/04, B44C 3/08

(54) **Panel with image and method for the production thereof**

(30) Priority: 16.05.2003 NL 1023452
(71) Applicant: W/M Systems B.V., 2661 EP Bergschenhoek (NL)
(72) Inventor: Brugman, Thomas Gerardus, 2715 AN Zoetermeer (NL); De Jager, Maarten, 2587 TX Den Haag (NL)
(74) Representative: van Westenbrugge, Andries

(57) **Abstract**

The surface of a panel has been subjected to machining, the machining having transferred an image to the panel. A pattern that reproduces the image is now visible on the panel by a deliberate or coincidental interaction with light.

The panel is provided with an image, wherein the image is made up of image elements and each image element contains graphical information, wherein the graphical information for each image element has been applied in the panel as a grid point in a grid by mechanical machining, wherein each grid point is a cavity in the panel.

Legend for Fig. 6

101 = Creation of image
102 = Digitisation of image
103 = Image processing
104 = Coding
105 = Compilation of machining programme
106 = Storage of instruction file
107 = Transmission of instruction file to machining machine
108 = End

## Description

The invention relates to a panel according to the precharacterising clause of Claim 1. The invention also relates to a method for the production thereof in accordance with the precharacterising clause of Claim 10.

Panels are known for diverse applications for example as screens to subdivide an area into smaller areas or to delimit an area, or as part of such a screen, and also as interior or exterior wall cladding inside or outside a building.

It is known that such panels can be provided with an image, a motif or another distinguishing symbol. This can be done to improve the function of the panel, but can also be to increase the decorative value of the panel.

Application of the image can take place in various ways, for example manually by means of painting, or by sticking a printed plastic layer to the panel. The disadvantage of these methods for applying the image is that these usually demand a great deal of effort and usually also accuracy. Manual application in particular can be fairly expensive.

In addition, the image is usually subject to wear in use. It can be necessary to reapply the image during the life of the panel.

One aim of the present invention is to provide a panel to which a durable image has been applied in a simple manner. This aim is achieved by the panel according to the precharacterising clause of Claim 1, characterised in that the graphical information for each image element is applied in the panel as a grid point in a grid by mechanical machining, each grid point being a cavity in the panel.

What is advantageously achieved by this means is that an image is applied to the panel in a reproducible manner. Because of the possible reproduction, the present invention is extremely suitable for the series production of panels with the same image.

The invention makes it advantageously possible to apply the image for the life of the panel.

In addition, the invention relates to a method for the production of the image on the panel according to the precharacterising clause of Claim 10, characterised in that mechanical machining applies the graphical information for each image element as a grid point in a grid, each grid point being a cavity in the panel.

The invention furthermore relates to a computer system for carrying out the method.

Furthermore, the invention relates to a computer program product for carrying out the method.

Finally, the present invention relates to a data carrier provided with the computer program as described above.

The invention will be explained in more detail below with reference to a few drawings, in which illustrative embodiments thereof are shown. They are intended exclusively for illustrative purposes and not to restrict the inventive concept, which is defined by the claims.

In the drawings:
Figure 1 shows a diagrammatic image that has to be applied to a panel according to the present invention;
Figure 2 shows a diagrammatic pattern as conversion for the diagrammatic image in Figure 1, according to the present invention;
Figure 3 shows a first code for converting an image into a pattern;
Figure 4 shows a second code for converting an image into a pattern;
Figure 5 shows a computer system for converting an image into a pattern according to the present invention;
Figure 6 shows a flowchart for a method for the production of a panel with image according to the present invention; and
Figures 7 and 8 show an example of figurative and non-figurative patterns, respectively, for a panel according to the present invention.

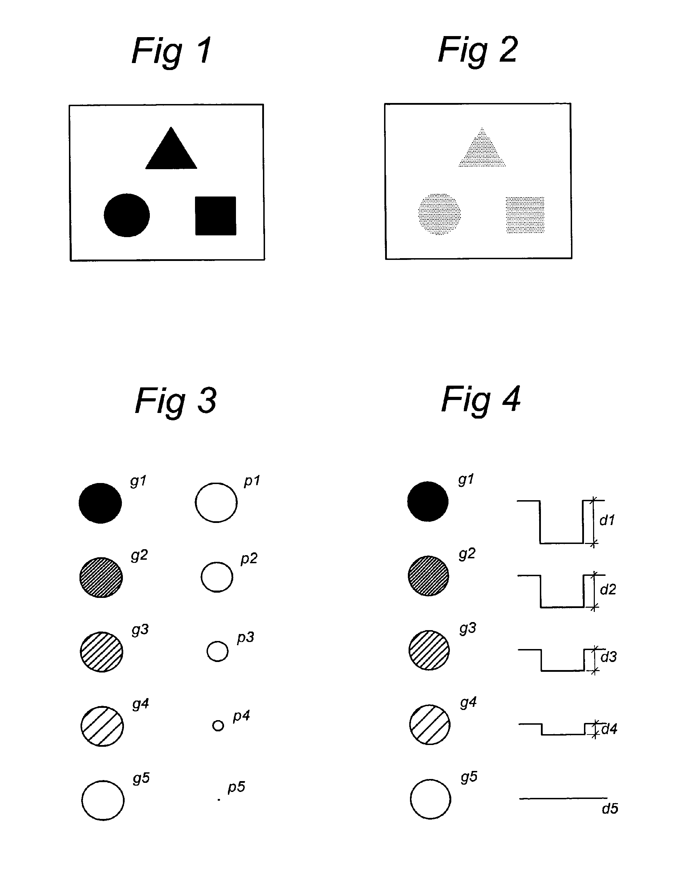

Figure 1 shows a diagrammatic image that has to be applied to a panel according to the present invention.

In which manner the image can be transferred onto the panel will be described below.

An image, motif, pattern or decoration has to be applied to a panel. This panel can be intended as a screen for subdividing an area into smaller areas or to delimit an area, or as a component of such a screen, and also as interior or exterior wall cladding inside or outside a building.

The invention provides a panel, the surface of which has undergone machining, the machining having transferred the image to the panel. A pattern that reproduces the image is now visible on the panel by deliberate or coincidental interaction with light.

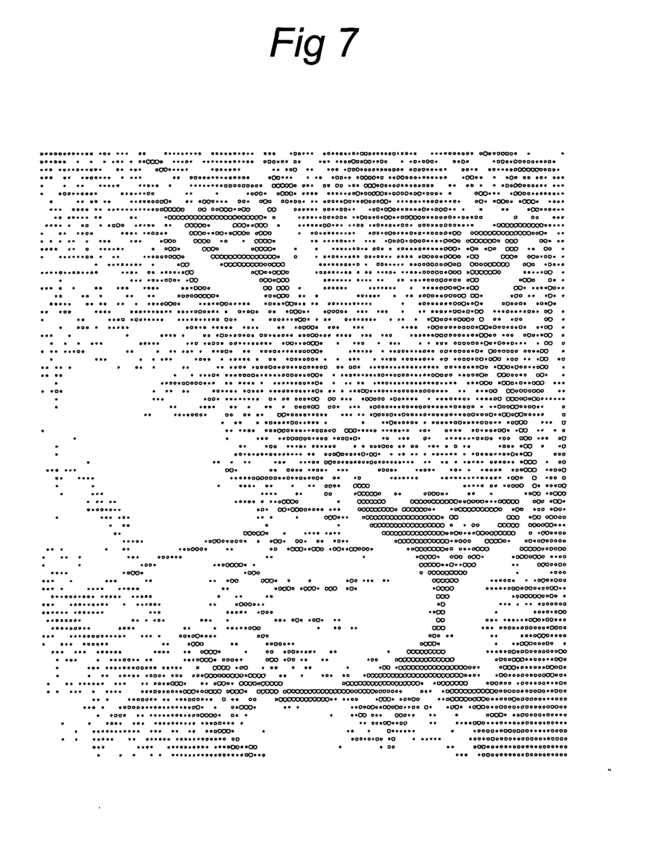

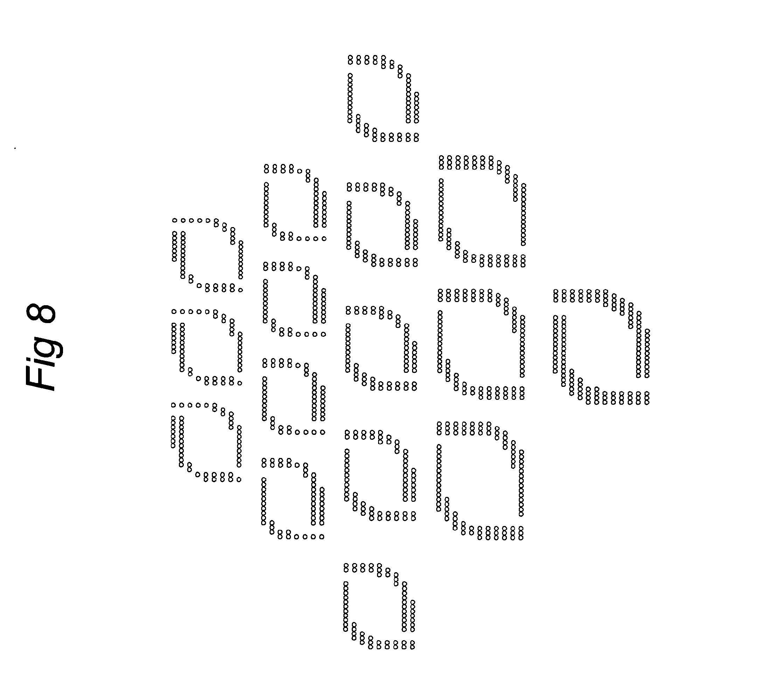

The image can consist of an arbitrary graphical shape. Such a graphical shape can be made up of one or more composition elements. In Figure 1 an image is shown by way of example as a composition of three geometric elements. Photographic images are also possible, as will be explained in more detail below with reference to Figures 7 and 8.

It is known that a graphical shape can be analysed into image elements or pixels that contain graphical information, such as colour and/or intensity, for their place within the graphical shape.

By analysis, a grid is formed where each pixel is represented by a grid point.

Figure 2 shows a diagrammatic pattern as conversion for the diagrammatic image in Figure 1, according to the present invention.

In Figure 2 a grid is shown that has been derived from the graphical image in Figure 1. In this figure the grid points are shown with a gap between adjacent grid points.

According to the present invention, the grid that is formed by a known digitising technique is transferred to the panel to be machined by a machining machine. The machining machine uses the grid information to perform machining on the surface of the panel or in the panel such that the image in grid form is applied to or in the panel. With this procedure the digital grid is so scaled that an image of the grid on the panel has a predetermined size. The digital grid is usually orthogonal: the image elements are defined in a first grid direction and in a second grid direction perpendicular thereto. As is known to a person skilled in the art, another non-orthogonal grid type that is able to describe the image on the surface can also be used.

The invention provides for the formation of cavities in the panel as machining for applying the pattern. In this context a cavity also has to be understood to be a hole if the cavity extends through the thickness of the panel from the front face to the rear face of the panel. With this procedure a cavity or hole is made at each grid point, a predetermined distance between the respective centres of the grid points being employed as spacing between the grid points. This spacing is dependent on the size of the image of the grid on the panel. The spacing in the second grid direction can be chosen to be equal to or different from the spacing in the first grid direction.

According to the invention, the graphical information that each pixel contains is used as a variable in the cavity or the hole in the surface for the corresponding grid point in the image.

Figure 3 shows a first code for converting an image into a pattern. A first code for the graphical information of an image element contains the size and shape of the cavity depending on the intensity of the image element. In this case the image is bit mapped in a grey-scale code, the image elements having as value the local grey-scale value at their respective position in the graphical shape. In principle, the variation in grey-scale value and the associated shape and size of a cavity or hole are unrestricted. Such a digital code is known to those skilled in the art.

In Figure 3 a classification in five grey-scale values is shown as an example on the basis of image elements g1, g2, g3, g4 and g5, where image element g1 has maximum percentage black (100 %) image element g2 a percentage black of 75 %, image element g3 a percentage black of 50 %, image element g4 a percentage black of 25 % and image element g5 a percentage black of 0 %.

In addition to the image elements g1, g2, g3, g4 and g5, coding of cavity diameters p1, p2, p3, p4 and p5 corresponding therewith in terms of intensity is shown as an example. The shape of the cavity or hole could also be chosen to be other than circular. In the case of this illustrative code, the cavities are made as holes in the panel. The size of a cavity or hole is determined as a function of the percentage black of the corresponding image element. In this Figure 3 a linear relationship is used as an example, the size of the hole p1 thus being 100 %, of p2 75 %, of p3 50 %, of p4 25 % and of p5 0 % of a predetermined maximum size.

Figure 4 shows a second code for converting an image into a pattern.

A second code for the graphical information of an image element comprises the depth of the cavity in the panel as a function of the intensity of the image element. In the case of the second code as well, the image is bit mapped in a grey-scale code, the image elements having as value the local grey-scale value at their respective position in the graphical shape. Such a digital code is known to those skilled in the art. Round cavities are used in this second illustrative code. It will be clear that other shapes are also possible.

In Figure 4 a classification in five grey-scale values is shown as an example on the basis of the image elements g1, g2, g3, g4 and g5, the image element g1 having a maximum black percentage (100 %), the image element g2 a black percentage of 75 %, the image element g3 a black percentage of 50 %, the image element g4 a black percentage of 25 % and the image element g5 a black percentage of 0 %.

In addition to the image elements g1, g2, g3, g4 and g5, the corresponding cavity depths d1, d2, d3, d4 and d5 are shown. The depth of a cavity in the panel is determined as a function of the black percentage for the corresponding image element. In contrast to the first code according to Figure 3, with this code no holes are made that pass through the panel from front face to rear face.

In Figure 4 a linear relationship is used as an example, the depth of the cavity d1 thus being 100 %, of d2 75 %, of d3 50 %, of d4 25 % and of d5 0 % of a predetermined maximum cavity depth.

In Figure 4 the cavities shown have a flat base and side walls that are perpendicular with respect to the surface shown. It is pointed out that other cavity shapes are possible. The base is possibly not flat; the side walls can, for example, also be tapered. It will be clear to a person skilled in the art that possible cavity shapes depend on the machining used to create the cavities.

It will be clear to a person skilled in the art that the grey-scale classification can comprise an arbitrary number of values other than the example of five values. The relationship between size or depth of a cavity or size of a hole and the grey-scale information can also be other than simply linear. This can depend on the characteristics of the panel, but also on one or more possible desired image processing operations that are carried out on the bit map of the graphical shape.

The graphical information used for the machining operation can be other than grey-scale information; it could also be colour information.

Other codes for the graphical information to give cavities in the surface are also conceivable.

Finally, it is pointed out that combinations of codes are also possible.

The machining operation to make cavities or holes in the panel can take place with the aid of technology suitable for this purpose and a machining machine that is capable of executing an automated machining programme for the machining operation concerned. To this end the machining machine contains a control unit that controls the machining machine by means of the machining programme. For example, the machining machine is a computer-controlled milling machine or a punching machine.

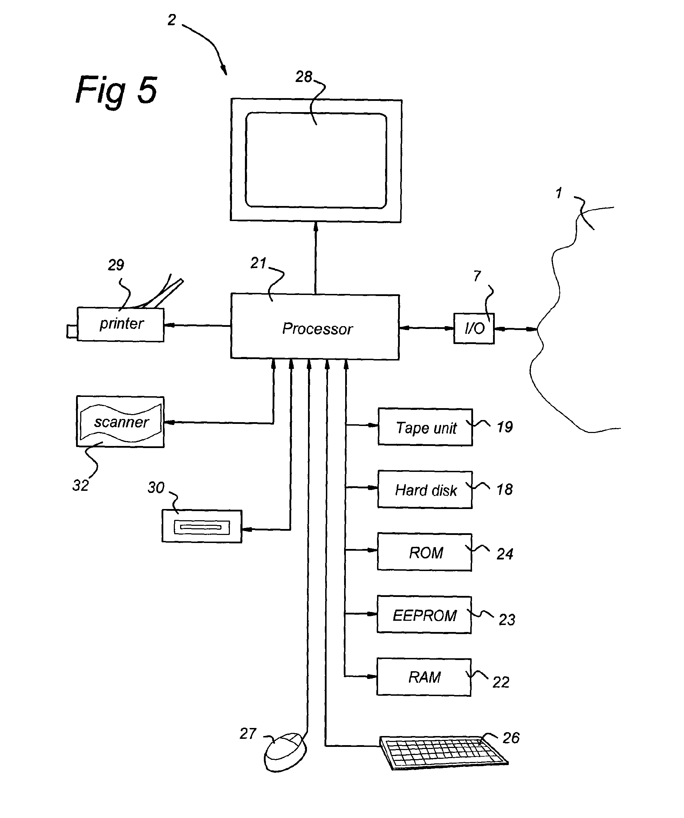

Figure 5 shows a computer system for converting an image into a pattern according to the present invention. A computer system 2 comprises a central processing unit 21 with peripheral equipment. The central processing unit 21 is connected to memory means 18, 19, 22, 23, 24 that store instructions and data, one or more readers 30 (to read, for example, floppy disks, CD-ROMs and DVDs, etc.), a keyboard 26 and a mouse 27 as input equipment and a screen 28 and a printer 29 as output equipment. In addition, a scanner 32 is provided as input equipment. Other input units, such as a trackball, a barcode reader and a touch screen, and also other output equipment can also be provided.

Furthermore, the central processing unit 21 is provided with a network adapter 7 for data communication with a network 1. The network adapter 7 is connected to the network 1. The network can comprise a large number of networks connected to one another, such as, for example, the Public Switched Telephone Network (PSTN) or an arbitrary other network that is suitable for data communication. For example, such mutually connected networks can be a local area network (LAN) or a wide area network (WAN). Other computer systems (of which one personal computer 31 is shown) are also connected to the network, which other computer systems are able to communicate with the central computer system 2 via said link. Such other computer systems, such as personal computer 31, are equipped in a similar manner to central computer system 2 with input means such as keyboard and mouse, memory means, readers and output units, such as screen and printer.

The memory means shown in Figure 5 comprise RAM 22 (E)EPROM 23, ROM 24, tape unit 19 and hard disk 18. However, more and/or other memory means can be provided, as will be clear to a person skilled in the art. Furthermore, if needed, one or more of these units can be installed remotely from the central processing unit 21.

The central processing unit 21 is shown as a single unit, but can also comprise various processing units that operate in parallel or are controlled by one central unit, it being possible for the processing units to be installed remotely from each other, as will be known to those skilled in the art.

The scanner 32 is equipped to digitise a graphical shape to give a bit map, an image of which has to be made on a panel. It is, incidentally, also possible that the graphical shape is generated in the computer system, so that a digital reproduction is immediately available.

The computer system 2 can convert a graphical shape into a bit map and then convert this bit map into a machining programme for a machining machine according to one of the abovementioned codes.

The machining machine can also be connected to the network 1 for receiving electronic data.

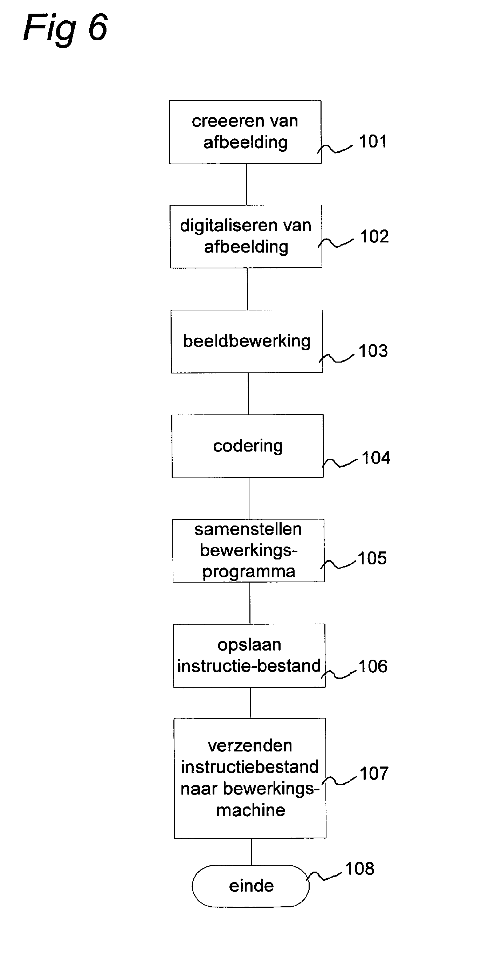

Figure 6 shows a flowchart for a method of the computer system 2 for the production of a panel with image according to the present invention.

In step 101 an electronic copy of a desired graphical shape is generated in the memory of the computer system 2. This can be effected by making use of an illustration program that is executed by the processing unit 21, a file that contains the graphical shape in electronic form being created. The scanner 32 can also be used for this purpose in order to store a graphical shape from a document or a photograph digitally in the memory.

Digitisation takes place in step 102, the bit map of the graphical shape being created.

In step 103 the processing unit 21 performs image processing on the graphical information of the digital image elements, so as to obtain a digital graphical image that is suitable for being able to be applied to the panel as image: for example, the contrast, the brightness and/or the definition has to be adapted.

In step 104 coding of the graphical information to give coded information for the machining operation to be employed is then carried out by the processing unit 21 for each image element. For example, to make cavities with a round shape and a diameter that is dependent on the intensity of the corresponding image element, here the intensity is converted to a value related to a diameter for each image element.

In step 105 the processing unit 21 performs the compilation of a machining programme for the machining machine on the basis of the coded information per image element from step 104. In this step the requisite instructions for the control unit of the machining machine are generated to enable the machining for each coded image element to be carried out in succession.

In step 106 the processing programme is stored by the computer system 2 as an instruction file in the memory means.

Finally, in step 107 the instruction file is transmitted from the memory to the control unit of the machining machine, after which the machining machine is able to apply an image of the desired graphical shape to a panel.

Transmission of the instruction file can take place via the data communication network 1. It is also possible for the instruction file to be transferred to the machining machine by means of a data carrier on which the instruction file has been stored.

The computer program terminates in step 108.

As an illustration, Figures 7 and 8 show examples of figurative and non-figurative patterns for a panel according to the present invention.

Figure 7 shows an example of a panel pattern that has been derived from a digitised photographic image. The pattern has been made up in accordance with the first illustrative code from circular cavities, the diameter of which varies as a function of the intensity of the corresponding elements in the digital file.

Figure 8 shows an example of a panel pattern that has been made up from non-figurative elements that, for example, have been generated by means of an illustration program. Here again the pattern is made up of circular cavities of different diameters.

Finally, it is pointed out that the panel according to the present invention can consist of any suitable structural material, such as metal, for example, aluminium, and plastic.

The panel can also consist of a laminate of one or more plastic layers and/or one or more metal layers, the layers of the laminate differing from one another in respect of colour and/or brightness. With such a laminate a pattern with a colour or brightness effect can be obtained by performing the production of cavities in the panel pattern in such a way that each cavity reaches a layer in the laminate that has a desired colour or brightness.

## Claims

1. Panel provided with an image, wherein the image is made up of image elements and each image element comprises graphical information, **characterised in that** the graphical information for each image element is applied in the panel as a grid point in a grid by mechanical machining, each grid point being a cavity in the panel.

2. Panel according to Claim 1, **characterised in that** graphical information for the image element is used as a variable in the mechanical machining of the corresponding cavity.

3. Panel according to Claim 1 or 2, **characterised in that** the cavity has a shape that is a function of the graphical information.

4. Panel according to Claim 1, 2 or 3, **characterised in that** the cavity has a size that is a function of the graphical information.

5. Panel according to Claim 1, 2, 3 or 4, **characterised in that** the cavity has a depth that is a function of the graphical information.

6. Panel according to one of the preceding claims, **characterised in that** the cavity is a hole in the panel.

7. Panel according to one of the preceding claims, **characterised in that** the graphical information comprises the intensity or colour of the image element.

8. Panel according to one of the preceding claims, **characterised in that** the panel is made of a laminate material.

9. Panel according to one of the preceding claims, **characterised in that** the panel is a dividing screen or wall panel.

10. Method for the production of a panel provided with an image, wherein the image is made up of image elements and each image element comprises graphical information, **characterised in that** mechanical machining applies the graphical information for each image element as a grid point in a grid, each grid point being a cavity in the panel.

11. Computer system provided with a processing unit, memory means, an input unit and an output unit, wherein the processing unit is connected to the memory means, to the input unit and to the output unit,
wherein the computer is equipped to generate a digital representation of a graphical shape that has to be displayed as image on a panel, wherein the image is made up of image elements and each image element contains graphical information, and is equipped to process the digital representation,
**characterised in that**
the processing unit is equipped to carry out coding of the graphical information for each image element as an instruction for a machining machine that applies the graphical information for each image element as a grid point in a grid, wherein each grid point is a cavity in the panel.

12. Computer program product that, after having been loaded in a computer system,
wherein the computer system is provided with a processing unit, memory means, an input unit and an output unit,
and wherein the processing unit is connected to the memory means, to the input unit and to the output unit,
enables the computer system to perform:
- generation of a digital representation of a graphical shape that has to be displayed as an image on a panel, wherein the image is made up of image elements and each image element contains graphical information, and
- processing of the digital representation,
**characterised in that**
the computer program product also enables the computer system to perform coding of the graphical information for each image element as an instruction for a machining machine that applies the graphical information for each image element as a grid point in a grid in the panel, wherein each grid point is a cavity in the panel.

13. Data carrier provided with a computer program product according to Claim 12.
